# EUROPÄISCHE PATENTSCHRIFT

(11) **EP 2 376 318 B1**
(45) Veröffentlichungstag und Bekanntmachung des Hinweises auf die Patenterteilung: **26.09.2012**
(21) Anmeldenummer: 09764737.4
(22) Anmeldetag: 04.12.2009
(51) Int. Cl.: B60T 17/08, F16D 65/14

(54) **FEDERSPEICHERBREMSZYLINDER MIT ÄUSSERER ENTLÜFTUNG**
SPRING BRAKE CYLINDER WITH EXTERNAL BLEEDING
CYLINDRE DE FREIN À RESSORT ACCUMULATEUR À VENTILATION EXTÉRIEURE

(30) Priorität: 10.12.2008 DE 102008061346
(43) Veröffentlichungstag der Anmeldung: 19.10.2011
(73) Patentinhaber: Knorr-Bremse Systeme für Nutzfahrzeuge GmbH, 80809 München (DE)
(72) Erfinder: DEROUAULT, Sylvain, F-14100 Hermival les Vaux (FR); MARTIN, Vincent, F-14100 Les Monceaux (FR); VOISIN, Franck, F-14340 Manerbe (FR)
(74) Vertreter: Mattusch, Gundula
(86) Internationale Anmeldenummer: PCT/EP2009/008661
(87) Internationale Veröffentlichungsnummer: WO 2010/066377

(56) Entgegenhaltungen:
- EP-A1- 0 025 558
- WO-A1-02/44004
- WO-A1-2007/039093
- DE-A1- 3 935 663
- US-B1- 7 121 191

## Beschreibung

### Stand der Technik

Die Erfindung geht aus einem Federspeicherbremszylinder für Bremsanlagen von Fahrzeugen, mit einem im Federspeicherbremszylinder angeordneten, durch wenigstens eine Speicherfeder betätigbaren Federspeicherbremskolben, welcher einer die Speicherfeder aufnehmende Federkammer von einer be- und entlüftbaren Federspeicherbremskammer des Federspeicherbremszylinders trennt, sowie mit einer Löseeinrichtung zum manuellen oder durch eine Antriebseinrichtung betätigten Lösen der Federspeicherbremse, wobei die Löseeinrichtung eine mit einer Federspeicherbremskolbenstange des Federspeicherbremskolbens zusammen wirkende und in einer Öffnung des Federspeicherbremszylinders gehaltene, von außerhalb des Federspeicherbremszylinders betätigbare Lösespindel beinhaltet, gemäß dem Oberbegriff von Anspruch 1.

Ein gattungsgemäßer Federspeicherbremszylinder ist beispielsweise aus der WO 97/07322 bekannt. Die dort beschriebene Löseeinrichtung dient zum Lösen einer passiven Federspeicherbremse, welche druckbeaufschlagt oder belüftet löst und druckentlastet oder entlüftet zuspannt, wenn der Federspeicherbremszylinder vom Fahrzeug entfernt, dort installiert oder wenn das Fahrzeug mit gelöster Federspeicherbremse abgeschleppt werden soll. Man spricht in diesem Zusammenhang auch von einem sog. "Notlösen" der Federspeicherbremse in Fällen, in welchen es aufgrund mangelnden Drucks in der Federspeicherbremskammer z.B. bei einer Störung in der Druckluftversorgung nicht möglich ist, die Federspeicherbremse zu lösen. Dann wird die durch manuelle oder durch eine mittels einer Antriebsvorrichtung hervorgerufene Drehung der Lösespindel beispielsweise durch ein Gewinde in eine Translationsbewegung des Federspeicherbremskolbens gewandelt, um die Federspeicherbremse zu lösen.

Aus dem Stand der Technik, beispielsweise aus der DE 10 2006 005 031 A1 sind kombinierte Betriebsbrems- und Federspeicherbremskolben sog. Kombizylinder bekannt, bei welchen der Federspeicherbremskolben im Parkbremsfall mit seiner Federspeicherbremskolbenstange den Betriebsbremskolben betätigt, welcher wiederum eine Betriebsbremskolbenstange aufweist, welche mit einem Bremsmechanismus der Fahrzeugbremse, insbesondere einer Scheibenbremse zusammen wirkt. Der Federspeicherbremskolben weist eine Federspeicherbremskolbenstange auf, welche an ihrem zum Betriebsbremszylinder weisenden Ende ein Entlüftungsventil trägt, das eine Strömungsverbindung zwischen der Federkammer und der Betriebsbremskammer herstellt oder sperrt. Das Entlüftungsventil ist dort endseitig in der hohlen Federspeicherbremskolbenstange des Federspeicherbremskolbens angeordnet, welcher abhängig vom Betriebszustand in die Betriebsbremskammer hineinragen kann. Das Entlüftungsventil hat die Aufgabe, beim Lösen der Feststellbremse den durch das Zurückfahren des Federspeicherbremskolbens und dadurch sich verkleinernde Volumen der Federkammer dort entstehenden Überdruck abzubauen, indem es durch diesen in Öffnungsstellung geschaltet wird und eine Strömungsverbindung zwischen der Federkammer und der Betriebsbremskammer herstellt. Beim Anfahren auf einer ebenen Fahrstrecke ist die Betriebsbremskammer entlüftet und steht mit einer Entlüftung eines Druckregelmoduls in Verbindung, da eine Betriebsbremsung nach dem Lösen der Feststellbremse nicht notwendig ist. Dann kann zumindest ein Teil des in der Federkammer überschüssigen Luftvolumens ausströmen, welche folglich von dort nicht direkt in die Atmosphäre gelangt, z.B. über ein in der Wandung des Federkammer angeordnetes Ventil, sondern über den Be- und Entlüftungsweg der Betriebsbremskammer. Deshalb spricht man in diesem Zusammenhang auch von innerer Entlüftung.

Beim Anfahren an einer ansteigenden Fahrstrecke ist es jedoch bei zunächst zugespannter Feststellbremse notwendig, vor dem Lösen der Feststellbremse wenigstens kurzzeitig zusätzlich die Betriebsbremse zuzuspannen, um ein Zurückrollen des Fahrzeugs beim Anfahren zu verhindern. In diesem Fall wird die Betriebsbremskammer belüftet. Bei ausreichend hoher Bremsanforderung durch den Fahrer vermag der in der Betriebsbremskammer und zugleich an der einen Seite des Kolbens anstehende Betriebsbremsdruck diesen gegen die Wirkung des sich in der Federkammer aufbauenden Drucks am Ventilsitz und dadurch das Entlüftungsventil geschlossen zu halten. Befinden sich allerdings aufgrund einer entsprechend geringen Betriebsbremsanforderung des Fahrers der Betriebsbremsdruck und/oder der Betriebsbremsdruckgradient unterhalb gewisser Schwellwerte, so reicht der an der einen Seite des Kolbens anstehende Betriebsbremsdruck nicht aus, um das Entlüftungsventil geschlossen zu halten. Dann strömt Druckluft von der Betriebsbremskammer über das geöffnete Entlüftungsventil in die Federkammer. Von dort wird sie durch den Dichtspalt zwischen der Arbeitsfläche der Federspeicherbremskolbendichtung und der Lauffläche des Federspeicherzylinders sowie die Gehäusedichtung in die Atmosphäre gepresst, was störende Pfeifgeräusche verursacht.

Der vorliegenden Erfindung liegt demgegenüber die Aufgabe zugrunde, einen Federspeicherbremszylinder der eingangs erwähnten Art derart weiter zu entwickeln, dass die in bestimmten Betriebssituationen auftretenden, auf Luftströmungen zurückzuführenden Geräusche reduziert oder vermieden werden.

Diese Aufgabe wird erfindungsgemäß durch die Merkmale von Anspruch 1 gelöst.

### Offenbarung der Erfindung

Die Erfindung basiert auf dem Gedanken, dass in der Lösespindel eine eine Ventileinrichtung beinhaltende Strömungsverbindung zwischen der Federkammer und der Umgebung ausgebildet ist, wobei die Ventileinrichtung abhängig von dem in der Federkammer herrschenden Druck die Strömungsverbindung öffnet oder sperrt. Diese Ventileinrichtung dient dann dazu, insbesondere bei einer passiven Federspeicherbremse, welche belüftet löst und entlüftet zuspannt, den in den oben beschriebenen Betriebszuständen vorhandenen Überdruck in der Federkammer in die Umgebung abzubauen, ohne dass eine die störenden Geräusche verursachende Strömung an der Dichtungsanordnung des Federspeicherbremskolbens vorbei erfolgt bzw. vermieden wird. Unter "Umgebung" wir dabei der außerhalb des Gehäuses des Federspeicherbremszylinders und unter Umgebungsdruck stehende Bereich verstanden.

Der Fachmann kann den Verlauf bzw. die Dimensionen des Strömungskanals und der Ventileinrichtung so auslegen, dass eine durch ihn strömende Luftsäule nur geringe bzw. keine hörbaren Strömungsgeräusche verursacht, was bei einer Anpassung der Dichtungsanordnung des Federspeicherbremskolbens nur schwer möglich ist.

Ein weiterer Vorteil gegenüber einer inneren Entlüftung des Stands der Technik liegt darin, dass die Ventileinrichtung unabhängig vom Druck in der Betriebsbremskammer betätigt wird und demzufolge auch beim Anfahren am Berg oder Hang die gewünschte Funktion ausführen kann.

Der Strömungskanal mit Ventileinrichtung zur Realisierung einer äußeren Entlüftung kann insbesondere zusätzlich oder anstatt einer oben beschriebenen inneren Entlüftung des Stands der Technik vorgesehen sein.

Besonders vorteilhaft ist dabei, dass Federspeicherbremszylinder in der Regel ohnehin mit einer Löseeinrichtung der oben beschriebenen Art versehen sind und eine solche Löseeinrichtung nun im Sinne einer vorteilhaften Doppelfunktion einerseits zum Lösen der Federspeicherbremse in Situationen, in denen keine Druckluftversorgung vorhanden ist, und andererseits zum Entlüften der Federkammer dient. Dies resultiert in einer vorteilhaft geringen Anzahl von Bauelementen.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt umfasst die Ventileinrichtung wenigstens einen durch wenigstens eine Feder gegen einen wenigstens Ventilsitz vorgespannten Ventilkörper, welcher in der geschlossenen Grundstellung einen in der Lösespindel koaxial ausgebildeten Strömungskanal verschließt und in der Öffnungsstellung abhängig vom dem in dem Strömungskanal herrschenden Druck öffnet.

Gemäß einer Weiterbildung steht ein einem Ventilglied der Ventileinrichtung in Bezug auf Strömung von der Federkammer in die Umgebung vorgeordneter Abschnitt des Strömungskanals durch wenigstens einen in der Lösespindel ausgebildeten Querkanal mit der Federkammer in Verbindung.

Besonders bevorzugt wirkt die Lösespindel mit dem Federspeicherbremskolben derart zusammen, dass eine Drehbewegung der Lösespindel eine Translationsbewegung des Federspeicherbremskolbens bewirkt.

Zur Realisierung ist die Lösespindel gegenüber dem Federspeicherbremszylinder bevorzugt axialfest, aber drehbar gelagert, wobei die Lösespindel an ihrem freien, zur Umgebung weisenden Ende mit einer Angriffsfläche für ein Drehwerkzeug versehen ist. Weiterhin kann die Lösespindel mittels einer Gewindeverbindung in einer Mutter drehbar gelagert sein, welche mit der Federspeicherbremskolbenstange drehfest verbunden ist. Dann bedingt eine beispielsweise manuell eingeleitete Drehung der Lösespindel in eine bestimmte Richtung eine Translationsbewegung des Federspeicherbremskolbens in Lösestellung.

Besonders bevorzugt ist weiterhin der Federspeicherbremszylinder mit einem Betriebsbremszylinder zu einem kombinierten Betriebsbrems- und Federspeicherbremszylinder zusammengefasst und der Betriebsbremszylinder weist einen im Gehäuse des Betriebsbremszylinders angeordneten Betriebsbremskolben auf.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines Kombizylinders mit einer Dichtungsanordnung gemäß einer bevorzugten Ausführungsform der Erfindung;
- Fig.2: einen vergrößerten Ausschnitt des Kombizylinders von Fig.1.

### Beschreibung des Ausführungsbeispiels

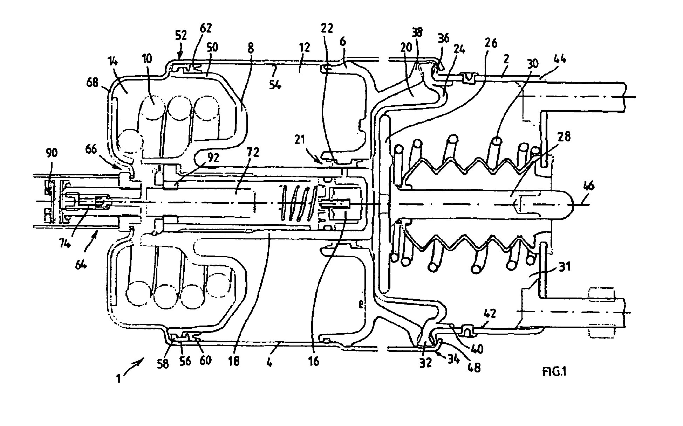

In Fig.1 ist ein kombinierter Betriebsbrems- und Federspeicherbremszylinder 1, nachfolgend Kombizylinder genannt, dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird Luft, welche innerhalb der die Speicherfeder 10 aufnehmenden Federkammer 14 ansteht, in einigen Betriebszuständen über ein Entlüftungsventil 16 in eine Betriebsbremskammer 20 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Federspeicherbremskolbenstange 18 verbunden, welche sich durch die Zwischenwand 6 in die Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Weiterhin ist an der Membrane 24 wenigstens ein sich in axialer Richtung erstreckender, in Bezug zum Befestigungsrand 32 nach radial innen versetzt angeordneter Zentrierring 40 ausgebildet, durch welchen sie gegen eine radial innere Umfangsfläche 42 einer Wandung 44 des Betriebsbremszylinders 2 zentrierbar ist. Besonders bevorzugt ist der Zentrierring 40 im wesentlichen senkrecht zu einer Mittelebene des Befestigungsrandes 32 angeordnet und ragt beispielsweise einseitig von der Membrane 24 weg. Denkbar ist allerdings auch, dass anstatt dieses einen Zentrierrings 40 oder zusätzlich ein weiterer, in Richtung des Federspeicherbremszylinders 4 ragender und gegen die radial innere Umfangsfläche dessen Wandung zentrierender Zentrierring vorgesehen ist.

Nicht zuletzt liegt die radial innere Umfangsfläche 42 des Betriebsbremszylinders 2, gegen welche der Zentrierring 40 zentriert, bevorzugt auf einem gedachten Zylinder, dessen Mittelachse koaxial zur Zylinderachse 46 ist. Der Zentrierring 40 kann wie gezeigt in Umfangsrichtung gesehen vollständig umlaufend oder aus Ringabschnitten bestehend ausgebildet sein. Die Membrane 24 ist bevorzugt aus Gummi gefertigt und der Zentrierring 40 mit ihr einstückig ausgebildet.

Dann sorgt eine eine axiale Komponente aufweisende Klemmkraft der gegeneinander geklemmten Zwischenwand 6 und Betriebsbremszylinder 2 dafür, dass der Zentrierring 40 der Membrane 24 gegen die radial innere Umfangsfläche 42 der Wandung 44 des Betriebsbremszylinders 2 gepresst wird. Mit anderen Worten sorgt die axiale Komponente der Klemmkraft dafür, dass der Befestigungsrand 32 aufgrund der Keilwirkung nach radial außen gezogen und dadurch der Zentrierring 40 mit höherer radialer Kraft gegen die radial innere Umfangsfläche 42 der Wandung 44 des Betriebsbremszylinders 2 im Sinne einer Selbstverstärkung der Zentrierung gepresst wird.

Realisierbar ist eine solche axiale Klemmkraftkomponente beispielsweise dadurch, dass der einen Flansch 36 ausbildende Rand des Betriebsbremszylinders 2 sowie der Flansch 38 der Zwischenwand 6 von einem Rand 48 der Wandung des Federspeicherbremszylinders 4 nach Art einer Bördelung übergriffen werden, welche beispielsweise durch einen Umformprozess hergestellt wird. Diese Bördelung sorgt dann für die axiale Komponente der Klemmkraft.

Der Federspeicherbremskolben 8 trägt an seiner radial äußeren Umfangsfläche, genauer an seinem Kolbenhemd 50 eine Dichtungsanordnung 52, zur Abdichtung der die Speicherfeder 10 beinhaltenden Federkammer 14 gegenüber der be- und entlüftbaren Federspeicherbremskammer 12 des Federspeicherbremszylinders 4. Die Dichtungsanordnung 52 weist einen den Federspeicherbremskolben 8 gegenüber einer Lauffläche 54 des Federspeicherbremszylinders 4 mit seiner radial äußeren Arbeitsfläche 56 führenden Führungsring 58 und wenigstens ein mit seinem Dichtungsabschnitt 60 gegen die Lauffläche 54 des Federspeicherbremszylinders 4 dichtendes Dichtungselement 62, wobei die Arbeitsfläche 56 des Führungsrings 58 dem Dichtungsabschnitt 60 des Dichtungselements 62 in Strömungsrichtung von der Federkammer 14 in die Federspeicherbremskammer 12 gesehen vorgeordnet ist und der Führungsring 58 aus einem gegenüber dem Material des wenigstens einen Dichtungselements 62 steiferen Material besteht.

Insbesondere besteht der Führungsring 58 aus einem steifen Kunststoff wie Acetal und das Dichtungselement 62 aus einem demgegenüber elastischeren Elastomer. Die Federspeicherbremskolbenstange 18, der Federspeicherbremskolben 8 und die Zwischenwand 6 bestehen bevorzugt aus Aluminium.

Der Federspeicherbremszylinder 4 weist eine Löseeinrichtung 64 zum bevorzugt manuell betätigten Lösen der Federspeicherbremse auf, wobei die Löseeinrichtung 64 eine mit der Federspeicherbremskolbenstange 18 des Federspeicherbremskolbens 8 zusammen wirkende und in einer Öffnung 66 eines Gehäuses 68 des Federspeicherbremszylinders 4 gehaltene, von außerhalb des Gehäuses 68 betätigbare, an sich z.B. aus der DE 10 2006 005 031 A1 bekannte Lösespindel 72 beinhaltet.

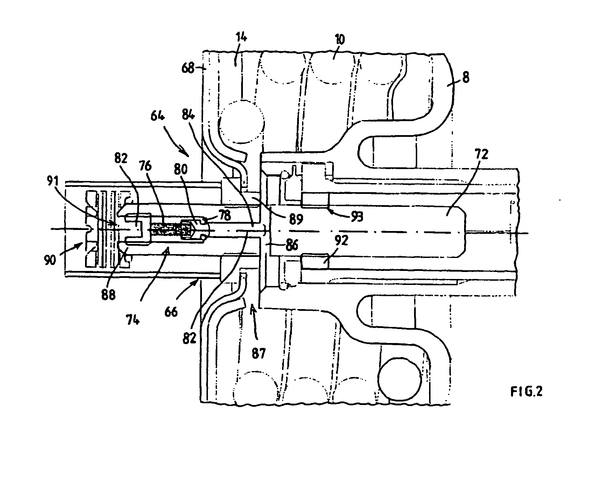

Wie am besten anhand von Fig.2 zu sehen ist, ist im Unterschied zum Stand der Technik in der Lösespindel 72 eine eine Ventileinrichtung 74 beinhaltende Strömungsverbindung bevorzugt in Form eines Strömungskanals 82 zwischen der Federkammer 14 und der Umgebung ausgebildet, wobei die Ventileinrichtung 74 abhängig von dem in der Federkammer 14 herrschenden Druck den Strömungskanal 82 öffnet oder sperrt. Diese Ventileinrichtung 74 dient dann dazu, insbesondere bei einer passiven Federspeicherbremse des bevorzugten Ausführungsbeispiels, welche belüftet löst und entlüftet zuspannt, einen evtl. in der Federkammer 14 vorhandenen Überdruck in die Umgebung abzubauen, ohne dass eine Strömung von der Federkammer 14 an der Dichtungsanordnung 52 des Federspeicherbremskolbens 8 vorbei in die Umgebung erfolgt.

Besonders bevorzugt umfasst die Ventileinrichtung 74 wenigstens einen durch wenigstens eine Feder 76 gegen einen wenigstens Ventilsitz 78 vorgespannten Ventilkörper 80, welcher in der geschlossenen Grundstellung den in der Lösespindel 72 koaxial ausgebildeten Strömungskanal 82 verschließt und in der Öffnungsstellung abhängig vom dem in dem Strömungskanal 82 herrschenden Druck öffnet. Der Fachmann passt dabei die Federrate der Feder 76 sowie die Dimensionierung und die Geometrie des Strömungskanals 82 an das gewünschte Öffnungs- und Schließverhalten der Ventileinrichtung 74 bzw. an den gewünschten Öffnungsgrenzdruck an.

Besonders bevorzugt steht ein dem Ventilkörper 80 der Ventileinrichtung 74 in Bezug auf die Strömung von der Federkammer 14 in die Umgebung vorgeordneter Abschnitt 84 des Strömungskanals 82 durch wenigstens einen in der Lösespindel 72 ausgebildeten Querkanal 86 und eine Ausnehmung 87 im Federspeicherbremskolben 8 mit der Federkammer 14 in Verbindung.

Besonders bevorzugt ist weiterhin die Lösespindel 72 gegenüber dem Gehäuse 68 durch eine Lagerung 89 axialfest, aber drehbar gelagert, wobei die Lösespindel 72 an ihrem freien, zur Umgebung weisenden Ende 88 sowohl mit einer Angriffsfläche 90 für ein Drehwerkzeug als auch mit einer offenen Mündung 91 des Strömungskanals 82 versehen ist.

Wenn weiterhin die Lösespindel 72 mittels eines Gewindes 93 in einer Mutter 92 drehbar gelagert ist, welche mit der Federbremskolbenstange 18 drehfest verbunden ist, dann bedingt eine beispielsweise manuell eingeleitete Drehung der Lösespindel 72 in eine bestimmte Richtung eine Translationsbewegung des Federspeicherbremskolbens 8 in Lösestellung. Alternativ kann die Löseeinrichtung 64 auch durch eine Antriebseinrichtung betätigbar ausgebildet sein.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Federspeicherbremskolbenstange
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Zentrierring
- 42: radial innere Umfangsfläche
- 44: Wandung
- 46: Zylinderachse
- 48: Rand
- 50: Kolbenhemd
- 52: Dichtungsanordnung
- 54: Lauffläche
- 56: Arbeitsfläche
- 58: Führungsring
- 60: Dichtungsabschnitt
- 62: Dichtungselement
- 64: Löseeinrichtung
- 66: Öffnung
- 68: Gehäuse
- 72: Lösespindel
- 74: Ventileinrichtung
- 76: Feder
- 78: Ventilsitz
- 80: Ventilkörper
- 82: Strömungskanal
- 84: Abschnitt
- 86: Querkanal
- 87: Ausnehmung
- 88: Ende
- 89: Lagerung
- 90: Angriffsfläche
- 91: Mündung
- 92: Mutter

## Patentansprüche

1. Federspeicherbremszylinder (1) für Bremsanlagen von Fahrzeugen, mit einem im Federspeicherbremszylinder (4) angeordneten, durch wenigstens eine Speicherfeder (10) betätigbaren Federspeicherbremskolben (8), welcher einer die Speicherfeder (10) aufnehmende Federkammer (14) von einer be- und entlüftbaren Federspeicherbremskammer (12) des Federspeicherbremszylinders (4) trennt, sowie mit einer Löseeinrichtung (64) zum manuellen oder durch eine Antriebseinrichtung betätigten Lösen der Federspeicherbremse, wobei die Löseeinrichtung (64) eine mit einer Federspeicherbremskolbenstange (18) des Federspeicherbremskolbens (8) zusammen wirkende und in einer Öffnung (66) des Federspeicherbremszylinders (4) gehaltene, von außerhalb des Federspeicherbremszylinders (4) betätigbare Lösespindel (72) beinhaltet, **dadurch gekennzeichnet, dass** in der Lösespindel (72) eine eine Ventileinrichtung (74) beinhaltende Strömungsverbindung (82) zwischen der Federkammer (14) und der Umgebung ausgebildet ist, wobei die Ventileinrichtung (74) abhängig von dem in der Federkammer (14) herrschenden Druck die Strömungsverbindung (82) öffnet oder sperrt.

2. Federspeicherbremszylinder nach Anspruch 1, **dadurch gekennzeichnet, dass** die Ventileinrichtung (74) wenigstens einen durch wenigstens eine Feder (76) gegen wenigstens einen Ventilsitz (78) vorgespannten Ventilkörper (80) umfasst, welcher in der geschlossenen Grundstellung einen in der Lösespindel (72) koaxial ausgebildeten Strömungskanal (82) verschließt und in der Öffnungsstellung abhängig vom dem in dem Strömungskanal (82) herrschenden Druck öffnet.

3. Federspeicherbremszylinder nach Anspruch 2, **dadurch gekennzeichnet, dass** ein dem federbelasteten Ventilkörper (80) der Ventileinrichtung (74) in Bezug auf Strömung von der Federkammer (14) in die Umgebung vorgeordneter Abschnitt (84) des Strömungskanals (82) durch wenigstens einen in der Lösespindel (72) ausgebildeten Querkanal (86) mit der Federkammer (14) in Verbindung steht.

4. Federspeicherbremszylinder nach einem der vorhergehenden Ansprüche, **dadurch gekennzeichnet, dass** die Lösespindel (72) mit dem Federspeicherbremskolben (8) derart zusammen wirkt, dass eine Drehbewegung der Lösespindel (72) in eine Translationsbewegung des Federspeicherbremskolbens (8) gewandelt wird.

5. Federspeicherbremszylinder nach Anspruch 4, **dadurch gekennzeichnet, dass** die Lösespindel (72) mittels einer Gewindeverbindung in einer Mutter (92) drehbar gelagert ist, welche mit der Federspeicherbremskolbenstange (18) drehfest verbunden ist.

6. Federspeicherbremszylinder nach einem der vorhergehenden Ansprüche, **dadurch gekennzeichnet, dass** die Lösespindel (72) gegenüber dem Federspeicherbremszylinder (4) axialfest, aber drehbar gelagert ist.

7. Federspeicherbremszylinder nach einem der vorhergehenden Ansprüche, **dadurch gekennzeichnet, dass** die Lösespindel (72) an ihrem freien, zur Umgebung weisenden Ende (88) mit einer Angriffsfläche (90) für ein Drehwerkzeug versehen ist

8. Federspeicherbremszylinder nach einem der vorhergehenden Ansprüche, **dadurch gekennzeichnet, dass** er mit einem Betriebsbremszylinder (2) zu einem kombinierten Betriebsbrems- und Federspeicherbremszylinder (1) zusammengefasst ist und der Betriebsbremszylinder (2) einen im Betriebsbremszylinders (2) verschieblich angeordneten Betriebsbremskolben (26) aufweist.

## Claims

1. Spring brake cylinder (1) for brake systems of vehicles, having a spring brake piston (8) which is arranged in the spring brake cylinder (8), can be actuated by at least one accumulator spring (10) and separates a spring chamber (14) which accommodates the accumulator spring (10) from a spring brake chamber (12) of the spring brake cylinder (4), which spring brake chamber (12) can be ventilated and bled, and having a release device (64) for releasing the spring brake in a manner which is manual or actuated by a drive device, the release device (64) comprising a release spindle (72) which interacts with a spring brake piston rod (18) of the spring brake piston (8), is held in an opening (66) of the spring brake cylinder (4) and can be actuated from outside the spring brake cylinder (4), **characterised in that** a flow connection (82) which contains a valve device (74) is formed between the spring chamber (14) and the surroundings in the release spindle (72), the valve device (74) opening or shutting the flow connection (82) as a function of the pressure which prevails in the spring chamber (14).

2. Spring brake cylinder according to claim 1, **characterised in that** the valve device (74) comprises at least one valve body (80) which is preloaded by at least one spring (76) against at least one valve seat (78), closes a flow channel (82) which is formed coaxially in the release spindle (72) in the closed basic position and opens it in the open position as a function of the pressure which prevails in the flow channel (82).

3. Spring brake cylinder according to claim 2, **characterised in that** a section (84) of the flow channel (82) is connected to the spring chamber (14) by at least one cross channel (86) which is formed in the release spindle (72), which section (84) is arranged in front of the spring-loaded valve body (80) of the valve device (74) in relation to flow from the spring chamber (14) into the surroundings.

4. Spring brake cylinder according to any of the preceding claims, **characterised in that** the release spindle (72) interacts with the spring brake piston (8) in such a way that a rotational movement of the release spindle (72) is converted into a translational movement of the spring brake piston (8).

5. Spring brake cylinder according to claim 4, **characterised in that** the release spindle (72) is mounted rotatably by means of a threaded connection in a nut (92) which is non-rotatably connected to the spring brake piston rod (18).

6. Spring brake cylinder according to any of the preceding claims, **characterised in that** the release spindle (72) is mounted axially fixedly but rotatably with respect to the spring brake cylinder (4).

7. Spring brake cylinder according to any of the preceding claims, **characterised in that** the release spindle (72) is provided with an application face (90) for a turning tool at its free end (88) which points toward the surroundings.

8. Spring brake cylinder according to any of the preceding claims, **characterised in that** it is combined with a service brake cylinder (2) to form a combined service brake and spring brake cylinder (1), and the service brake cylinder (2) has a service brake piston (26) which is arranged displaceably in the service brake cylinder (2).

## Revendications

1. Cylindre (1) de frein à ressort accumulateur pour des installations de freinage de véhicules, comprenant un piston (8) de frein à ressort accumulateur, qui est disposé dans le cylindre (4) de frein à ressort accumulateur, qui peut être actionné par au moins un ressort (10) accumulateur et qui sépare une chambre (14) pour le ressort, recevant le ressort (10) accumulateur, d'une chambre (12) pouvant être alimentée en air et purgée d'air du cylindre (4) de frein à ressort accumulateur, ainsi qu'un dispositif (64) de desserrage, pour le desserrage manuel ou actionné par un dispositif d'actionnement, du frein à ressort accumulateur, le dispositif (64) de desserrage coopérant avec une tige (18) du piston (8) de frein à ressort accumulateur et comportant une broche (72) de desserrage, maintenue dans une ouverture du cylindre (4) de frein à ressort accumulateur et pouvant être actionnée de l'extérieur du cylindre (4) de frein à ressort accumulateur, **caractérisé en ce que**, dans la broche (72) de desserrage est formée, entre la chambre (14) pour le ressort et l'atmosphère ambiante, une liaison (82) d'écoulement contenant un dispositif (74) de vanne, le dispositif (74) de vanne ouvrant ou fermant la liaison (82) d'écoulement en fonction de la pression régnant dans la chambre (14) pour le ressort.

2. Cylindre de frein à ressort accumulateur suivant la revendication 1, **caractérisé en ce que** le dispositif (74) de vanne comprend au moins un obturateur (80) précontraint contre au moins un siège (78) de vanne par au moins un ressort (76), obturateur qui, dans la position de base fermée, ferme un canal (82) d'écoulement formé coaxialement dans la broche (72) de desserrage et dans la position d'ouverture, l'ouvre en fonction de la pression régnant dans le canal (82) d'écoulement.

3. Cylindre de frein à ressort accumulateur suivant la revendication 2, **caractérisé en ce qu'**un tronçon (84) du canal d'écoulement disposé, par rapport au courant allant de la chambre (14) pour le ressort dans l'atmosphère ambiante, avant l'obturateur (80) chargé par un ressort du dispositif (74) de vanne est en liaison avec la chambre (14) pour le ressort par au moins un canal (86) transversal formé dans la broche (72) de desserrage.

4. Cylindre de frein à ressort accumulateur suivant l'une des revendications précédentes, **caractérisé en ce que** la broche (72) de desserrage coopère avec le piston (8) de frein à ressort accumulateur de manière à transformer un mouvement de rotation de la broche (72) de desserrage en un mouvement de translation du piston (8) de frein à ressort accumulateur.

5. Cylindre de frein à ressort accumulateur suivant la revendication 4, **caractérisé en ce que** la broche (72) de desserrage est montée tournante au moyen d'une liaison par filetage dans un écrou (92) qui est solidaire en rotation de la tige (18) du piston de frein à ressort accumulateur.

6. Cylindre de frein à ressort accumulateur suivant l'une des revendications précédentes, **caractérisé en ce que** la broche (72) de desserrage est montée fixe axialement par rapport au cylindre (4) de frein à ressort accumulateur, mais tournante.

7. Cylindre de frein à ressort accumulateur suivant l'une des revendications précédentes, **caractérisé en ce que** la broche (72) de desserrage est pourvue, à son extrémité (88) libre tournée vers l'atmosphère ambiante, d'une surface (90) d'attaque d'un outil tournant.

8. Cylindre de frein à ressort accumulateur suivant l'une des revendications précédentes, **caractérisé en ce qu'**il est réuni avec un cylindre (2) de frein de service en un cylindre (1) combiné de frein de service et de frein à ressort accumulateur et le cylindre (2) de frein de service a un piston (26) de frein de service monté coulissant dans le cylindre (2) de frein de service.
